# EUROPÄISCHE PATENTSCHRIFT

(11) **EP 0 576 975 B1**
(45) Veröffentlichungstag und Bekanntmachung des Hinweises auf die Patenterteilung: **12.03.1997**
(21) Anmeldenummer: 93109983.2
(22) Anmeldetag: 23.06.1993
(51) Int. Cl.: C01B 21/098, C08G 77/08

(54) **Phosphornitridchloride enthaltende Zusammensetzungen und Verfahren zu deren Herstellung**
Phosphonitride chloride compositions and preparation method
Compositions de chlorure de phosphonitrile et méthode pour les préparer

(30) Priorität: 03.07.1992 DE 4221854
(43) Veröffentlichungstag der Anmeldung: 05.01.1994
(73) Patentinhaber: Hüls Silicone Gesellschaft mit beschränkter Haftung, 01612 Nünchritz (DE)
(72) Erfinder: Rautschek, Holger, Dr. rer. nat. Dipl.-Chem., D-01612 Nünchritz (DE); Rösler, Harald, Dr. rer. nat. Dipl.-Chem., D-01129 Dresden (DE)
(74) Vertreter: Zöllner, Gudrun

(56) Entgegenhaltungen:
- EP-A- 0 082 278
- EP-A- 0 286 465
- EP-A- 0 316 810
- US-A- 4 225 567

## Beschreibung

Die Erfindung betrifft die Verwendung von Phosphornitridchloride enthaltenden Zusammensetzungen zur Beschleunigung der Kondensation und/oder Äquilibrierung von Organosiloxanen und/oder Organopolysiloxanen.

Als Phosphornitridchloride (auch als Phosphonitrilchloride oder Chlorophosphazene bezeichnet) sind alle Verbindungen zu verstehen, die aus Phosphor, Stickstoff und Chlor bestehen und die allgemeine Formel (PNCl₂)ₓ∗(PCI₅)_{y} haben (x ist eine ganze Zahl größer/gleich 1, y ist eine ganze Zahl größer/gleich 0) bzw. Gemische aus diesen Verbindungen.

Phosphornitridchloride enthaltende Zusammensetzungen sind bekannt (DE-AS 1 279 019, US-PS 3 839 388). Als Lösungsmittel für die Phosphornitridchloride werden z.B. Benzol, Toluol, Petrolether, Halogenkohlenwasserstoffe, Ether und Ketone vorgeschlagen (US-PS 3 652 711). In unpolaren Lösungsmitteln sind speziell die linearen Phosphornitridchloride nur sehr gering löslich. Auf Grund ihrer sehr geringen Konzentration in den Lösungen sind die Phosphornitridchloride besonders anfällig gegen Verunreinigungen in Lösungsmitteln bzw. gegen Hydrolyse. Deshalb haben derartige Lösungen oft nur eine geringe Lagerstabilität, und die Aktivität des Katalysators sinkt schnell ab. Lösungsmittel wie Ether, Ketone und Ester sind nicht vollständig inert gegenüber den Phosphornitridchloriden, was zu einer Desaktivierung des Katalysators unter Dunkelfärbung der gesamten Lösung führt. Es ist vorgeschlagen worden, als Lösungsmittel für die Phosphornitridchloride cyclische Dimethylsiloxane zu verwenden (JP-A 01 004 528). Diese sind aber ebenfalls nicht inert gegen den Katalysator, und die Lösungen haben nur eine geringe Haltbarkeit.

Als ausgezeichnete Lösungsmittel für katalytisch aktive Phosphornitridchloride sind Halogenkohlenwasserstoffe, wie z. B. Methylenchlorid (US-PS 3 839 388) bekannt, damit hergestellte Lösungen behalten ihre katalytische Aktivität über einen langen Zeitraum.

Eine andere Möglichkeit zur Herstellung von stabilen Lösungen, ist die Verwendung von Tensiden oder Kronenethern als Lösungsvermittler, z.B. zu Essigsäureethylester als Lösungsmittel (EP 381 204). Dieses Verfahren ist auf Grund der mehrstufigen Herstellung der Katalysatorlösung aufwendig. Außerdem können die eingesetzten Tenside bzw. Kronenether, im Gegensatz zu den sonst üblichen Lösungsmitteln, während der Polykondensation der Siloxanoligomeren nicht entfernt werden und stören bei der Weiterverarbeitung des Polymers.

Weiterhin wird in EP 082 278 ein Verfahren zur Reinigung cyclischer Chlorphosphazene beschrieben, indem diese mit Schwefeldioxid oder Schwefeloxidchloriden behandelt werden. Die gereinigten Phosphazene werden zu polymeren Chlorphosphazenen polymerisiert, welche in einer weiteren Stufe mit Alkoholaten zu hydrolysestabilen Tieftemperaturelastomeren umgesetzt werden. Cyclische Chlorophosphazene sind jedoch nicht als Katalysatoren für die Herstellung von Organo(poly)siloxanen geeignet.

Für die Herstellung des in der Siloxanchemie katalytisch aktiven Phosphornitridchlorids werden ausschließlich halogenierte Kohlenwasserstoffe, insbesondere Tetrachlorethan (Schenck, R. et al.: Ber. d. dt. chem. Ges. **57** 1343 (1924)), als Lösungsmittel erwähnt. Auch die Synthese in Tetrachlorethan in Gegenwart eines Tensides (z. B. 2-Ethylsulfosuccinat) ist beschrieben (JP-A 50 043 097). Zur Herstellung von Phosphornitridchlorid aus Phosphorpentachlorid und Ammoniumcarbamat wird der Einsatz von hochsiedenden, halogenierten Kohlenwasser-stoffen vorgeschlagen (Retaert, J.: Chem. Ind. London **17** 597 (1985). Ein Zusatz von Substanzen, die die Dielektrizitätskonstante erhöhen, wie z. B. Nitromethan, Nitrobenzol oder Phosphoroxidchlorid zu Tetrachlorethan, soll die Reaktionsgeschwindigkeit erhöhen.

Der Nachteil halogenierter Kohlenwasserstoffe besteht in ihrer hohen Toxizität; ihre Handhabung ist mit großen Risiken bzw. hohen Kosten verbunden.

Aufgabe der vorliegenden Erfindung war es, Phosphornitridchloride enthaltende Zusammensetzungen zu entwickeln, welche die Kondensation und/oder die Äquilibrierung von Organosiloxanen und/oder Organopolysiloxanen beschleunigen, welche keine Halogenkohlenwasserstoffe enthalten, sich durch eine sehr gute Lagerstabilität und katalytische Aktivität auszeichnen und frei sind von Stoffen, welche bei der Polykondensation und/oder der Äquilibrierung nicht entfernt werden können.

Eine weitere Aufgabe der vorliegenden Erfindung war die Herstellung der Phosphornitridchloride ohne die Verwendung halogenierter Kohlenwasserstoffe mittels eines Lösungsmittels, welches eine schnelle und selektive Reaktion gestattet.

Die der Erfindung zugrunde liegenden Aufgaben wurden gelöst, indem Phosphornitridchloride enthaltende Zusammensetzungen zur Beschleunigung der Kondensation und/oder Äquilibrierung von Organosiloxanen und/oder Organopolysiloxanen bereitgestellt wurden, die 1 bis 99 Gew.-% anorganische und/oder organische Säurehalogenide enthalten.

Als weitere Lösungsmittel können in den erfindungsgemäßen Zusammensetzungen alle üblichen organischen, wie beispielsweise Dekahydronaphthalin, Ethylacetat oder Toluol, enthalten sein.

Die Herstellung der Phosphornitridchloride der allgemeinen Formel (PNCl₂)ₓ∗(PCl₅)_{y} (x ist eine ganze Zahl größer/gleich 1, y ist eine ganze Zahl größer/gleich 0) bzw. der Gemische aus diesen Verbindungen kann dabei durch Umsetzung von Phosphorpentachlorid mit einem Ammoniumsalz vorteilhafterweise sofort in einem Säurehalogenid erfolgen.

Als anorganische und/oder organische Säurehalogenide werden vorzugsweise anorganische und/oder organische Säurechloride verwendet. Die bevorzugten anorganischen Säurechloride sind Säurechloride der phosphorigen Säure, der Phosphorsäure, der schwefligen Säure und/oder der Schwefelsäure, wobei Thionylchlorid und Phosphorylchlorid besonders bevorzugt sind. Als organische Säurechloride werden in den erfindungsgemäßen Zusammensetzungen aliphatische und/oder aromatische Carbonsäurechloride und/oder Alkyl- und/oder Arylsulfonsäurechloride verwendet, wobei für die gebrauchsfertigen Zusammensetzungen Acetylchlorid besonders bevorzugt ist, während sich für die Herstellung der Phosphornitridchloride Benzoylchlorid besonders eignet.

Organische und anorganische Säurehalogenide sind als sehr reaktive Zwischenprodukte in der organischen bzw. anorganischen Synthesechemie bekannt. Es war daher nicht zu erwarten, daß diese hochreaktiven Verbindungen ausgezeichnete Lösungsmittel für die in den erfindungsgemäßen Zusammensetzungen enthaltenen Phosphornitridchloride und damit sehr reaktive und vor allem lagerstabile Katalysatormischungen zur Beschleunigung der Kondensations- bzw. die Äquilibrierungsreaktionen der Organo(poly)siloxane darstellen, wobei die verwendeten Säurehalogenide die Reaktion nicht störend beeinflussen.

Aufgrund der hohen Reaktivität der Säurehalogenide war es auch nicht zu erwarten, daß sich diese Säurehalogenide als inertes Lösungsmittel für chemische Reaktionen eignen. Die Reaktionszeit ist abhängig vom Siedepunkt des verwendeten Säurehalogenides, je niedriger dieser ist, desto längere Zeit beansprucht die Umsetzung. Man erkennt das Reaktionsende an einer Verringerung der Chlorwasserstoffentwicklung. Vorzugsweise wird die Umsetzung der Ammoniumsalze mit Phosphorpentachlorid durch Erhitzen, z. B. durch Kochen unter Rückfluß, beschleunigt. Bei niedrig siedenden Säurehalogeniden kann hierbei der Einsatz von erhöhtem Druck sinnvoll sein.

Das molare Verhältnis von Ammoniumsalzen zu Phosphorpentachlorid richtet sich dabei nach dem gewünschten Zielprodukt. Für eine hohe Ausbeute an cyclischen Phosphornitridchloriden ist es sinnvoll, ein molares Verhältnis von 1 : 1 zu wählen, während für die Herstellung der, insbesondere in den erfindungsgemäßen Zusammensetzungen enthaltenen, katalytisch aktiven Phosphornitridchloride ein molarer Überschuß von PCl₅ gegenüber dem Ammoniumsalz bevorzugt wird. Als Ammoniumsalz wird vorzugsweise Ammoniumchlorid verwendet.

Erfolgt die Umsetzung von Phosphorpentachlorid mit dem Ammoniumsalz erfindungsgemäß in einem anorganischen und/oder einem organischen Säurechlorid, erhält man dabei direkt erfindungsgemäße Zusammensetzungen. Durch Abdestillieren eines Teiles des Säurechlorides und/oder durch Verdünnen mit einem anderen Lösungsmittel auf die gewünschte Konzentration können die Zusammensetzungen modifiziert werden.

Weitere Möglichkeiten zur Herstellung der erfindungsgemäßen Zusammensetzungen sind:
- der Zusatz von Säurehalogeniden zu Phosphornitridchloriden, welche nach anderen Verfahren hergestellt wurden und ggf. in einem anderen organischen Lösungsmittel gelöst vorliegen sowie
- der Zusatz eines anderen organischen Lösungsmittels zu den erfindungsgemäß in Gegenwart eines Säurehalogenides hergestellten Phosphornitridchloriden, nachdem ggf. Säurehalogenid abdestilliert wurde.
Dabei können sowohl erfindungsgemäß hergestellte Phosphornitridchloride, nach Abdestillieren des zur Synthese verwendeten Säurechlorides, als auch anders synthetisierte Phosphornitridchloride verwendet werden.
Beispielsweise ist es möglich, die Synthese in Benzoylchlorid durchzuführen, die dort aufgrund des hohen Siedepunktes sehr schnell abläuft und das so hergestellte Phosphornitridchlorid nach Abdestillieren des Benzoylchlorides in Acetylchlorid zu lösen, das sich bei Verwendung als Katalysatorzusammensetzung für die Herstellung von Polysiloxanen leicht wieder aus der Reaktionsmischung entfernen läßt.

Phosphornitridchloride, die erfindungsgemäß Säurehalogenide enthalten, können durch Standardmethoden aufgetrennt werden. Die so gewonnenen Produkte, insbesondere die cyclischen Phosphornitridchloride, sind z.B. zur Herstellung von speziellen Polymeren (Devadoss, E. et al.: Polymer **26** 1895 (1985)) oder als Ausgangsstoff für spezielle Synthesebausteine (Schwesinger, R. et al. Angew. Chem. **103** 1376 (1991)) einsetzbar.

Die erfindungsgemäßen Zusammensetzungen zeichnen sich durch eine sehr gute Lagerstabilität sowie eine sehr gute katalytische Aktivität aus. Sie sind während der Polykondensation bzw. Äquilibrierung von Organo- und/oder Organopolysiloxanen aus dem Polymeren entfernbar und stören nicht bei der Weiterverarbeitung.
Ein weiterer Vorteil ist die unkomplizierte Rückstandsaufarbeitung, da das Halogen durch Hydrolyse vollständig in Halogenid überführt wird und damit der Gefahr einer Dioxinbildung bei der Rückstandsverbrennung wirksam begegnet werden kann. Anorganische Säurehalogenide lassen sich vollständig in neutrale Salze oder Salzlösungen überführen.

### Anwendungsbeispiele

### Beispiel 1

Es wurden 20 g PCl₅ und 2,6 g NH₄Cl mit 150 ml Benzoylchlorid gemischt. Nach 1 h Erhitzen unter Rückfluß wurde eine schwach gelbe klare Lösung erhalten.
Mit 10 µl dieser Lösung konnten 100 g lineares Polydimethylsiloxan mit endständigen Hydroxylgruppen und einer Viskosität von 100 mPas bei 100 °C und 20 mbar innerhalb von 3 Minuten zu einem Polymer mit einer Viskosität größer 1000 Pas kondensiert werden. Die Neutralisation erfolgte durch 5 µl Triethylamin.

### Beispiel 2

Es wurden 30 g PCl₅ und 2,6 g NH₄Cl mit 100 ml Benzoylchlorid gemischt. Nach 1 h Erhitzen unter Rückfluß wurde eine schwach gelbe klare Lösung erhalten.
Mit 10 µl dieser Lösung konnten 100 g lineares Polydimethylsiloxan mit endständigen Hydroxylgruppen und einer Viskosität von 100 mPas bei 100 °C und 400 mbar innerhalb von 5 Minuten zu einem Polymer mit endständigen Hydroxylgruppen und einer Viskosität von 26 Pas kondensiert werden. Die Neutralisation erfolgte durch 5 µl Triethylamin.

### Beispiel 3

Es wurden 20 g PCl₅ und 5,2 g NH₄Cl mit 100 ml Benzoylchlorid gemischt. Nach 4 h Erhitzen am Rückfluß wurde eine dunkle Lösung erhalten, die cyclische Phosphornitridchloride enthielt, welche durch Extraktion mit Petrolether und Vakuumsublimation isoliert werden konnten.

### Beispiel 4

Es wurden 20 g PCl₅ und 2,6 g NH₄Cl mit 100 ml Ethansulfonylchlorid 4 h unter Rüchfluß erhitzt. Mit 10 µl der entstandenen dunkelgefärbten Lösung wurden 100 g lineares Polydimethylsiloxan mit endständigen Hydroxylgruppen und einer Viskosität von 100 mPas bei 100 °C und 100 mbar innerhalb von 5 Minuten zu einem Polymer mit endständigen Hydroxylgruppen und einer Viskosität von 830 Pas kondensiert. Die Neutralisation erfolgte durch 5 µl Triethylamin.

### Beispiel 5

Es wurden 20 g PCl₅ und 2,6 g NH₄Cl mit 100 ml Benzolsulfonylchlorid 4 h unter Rückfluß erhitzt. Mit 10 µl der entstandenen hellgelben Lösung wurden 100 g lineares Polydimethylsiloxan mit endständigen Hydroxylgruppen und einer Viskosität von 100 mPas bei 100 °C und 150 mbar innerhalb von 5 Minuten zu einem Polymer mit endständigen Hydroxylgruppen und einer Viskosität von 250 Pas kondensiert. Die Neutralisation erfolgte durch 5 µl Triethylamin.

### Beispiel 6

Es wurden 200 g PCl₅ und 26 g NH₄Cl mit 1,5 l Thionylchlorid gemischt. Es trat zunächst keine Lösung ein. Nach 50 h Kochen unter Rückfluß wurde eine gelbe klare Lösung erhalten.
Nach Abdampfen wurden 150 g einer wachsartigen gelben Masse erhalten. Die Reaktionslösung selbst hatte eine sehr hohe katalytische Aktivität, mit 420 µl dieser Lösung wurden 2 kg lineares Polydimethylsiloxan mit endständigen Hydroxylgruppen und einer Viskosität von 100 mPas bei 100 °C und 20 mbar innerhalb von 5 Minuten zu einem Polymer mit einer Viskosität von 3025 Pas kondensiert, wobei mit 5 ml einer 10 %-igen Trisisooctylaminlösung in Toluol neutralisiert wurde.

### Beispiel 7

200 g PCl₅ und 25 g NH₄Cl wurden in 1 l POCl₃ 30 h unter Feuchtigkeitsausschluß unter Rückfluß erhitzt. Anschließend wurde der in der Kälte ausgefallene Rückstand abgetrennt und die klare Lösung im Vakuum eingeengt. Es wurde eine gelbe, wachsartige Masse erhalten, die lt. ³¹P-NMR identisch mit einem analog unter Einsatz von Tetrachlorethan als Lösungsmittel hergestellten Katalysator war. Der erfindungsgemäß hergestellte Katalysator wurde für die folgenden Beispiele verwendet.

### Beispiele 8 bis 11

Es wurden 10 %-ige Lösungen in verschiedenen Lösungsmitteln hergestellt. Mit 1 ml der jeweiligen Lösung wurden 10 kg lineares Polydimethylsiloxan mit endständigen Hydroxylgruppen bei 100 °C und 400 mbar während 5 min. kondensiert. Anschließend erfolgte die Neutralisation mit 4 ml einer 10 %-igen Triethylaminlösung in Toluol. Verglichen wurden die Viskositäten der hergestellten linearen Polydimethylsiloxanole.

| Beispiel Nr. | Lösungsmittel | Viskosität (Pas) |
|---|---|---|
| 8 | Thionylchlorid | 52 |
| 9 | Acetylchlorid | 40 |
| 10 | Benzoylchlorid | 15 |
| 11 | Methylenchlorid (Vergleich) | 41 |

Die 10 %-igen Lösungen blieben über 8 Wochen unverändert katalytisch aktiv, nur waren bei Mischungen, die statt Thionylchlorid Methylenchlorid enthielten, starke starke Schwankungen der Aktivität zwischen verschiedenen Chargen von Katalysatorlösungen gleicher Zusammensetzung zu beobachten.
Die hergestellten Polydimethylsiloxanole waren klar und geruchlos, das Kondensationswasser der Versuche 8 bis 10 enthielt die Hydrolyseprodukte der Säurechloride, die in ihre Salze überführbar sind.

### Beispiele 12 bis 16

Einer analog Beispiel 8 erhaltenen Phosphornitridchlorid-Zusammensetzung in Thionylchlorid (A) wurden weitere Lösungsmittel (B) zugesetzt. Es entstanden wiederum klare Lösungen, die ihre Aktivität länger als 2 Monate behielten. Die Ergebnisse, bei Verwendung einer den Beispielen 8 bis 11 entsprechenden Katalysatormenge und nach einer Reaktionszeit von 5 min., sind in der folgenden Tabelle dargestellt:

| Beispiel Nr. | zugesetztes Lösungsmittel | Vol.-Teile A : B | Viskosität (Pas) |
|---|---|---|---|
| 12 | Dekalin | 1 : 1 | 61 |
| 13 | Dekalin | 1 : 9 | 20 |
| 14 | Ethylacetat | 1 : 1 | 286 |
| 15 | Ethylacetat | 1 : 9 | 122 |
| 16 | Toluol | 2,5 : 97,5 | 59 |

### Beispiel 17

Eine 20 %-ige Lösung des Phosphornitridchlorides analog Beispiel 7 in Thionylchlorid wurde mit Ethylacetat auf 1 % phornitridchlorid verdünnt. Die Aktivität dieser Lösung wurde in Abhängigkeit von der Lagerzeit bestimmt. 0,1 ml der gelagerten Lösung wurden mit 100 g linearen Dimethylsiloxanoligomeren, die endständige Hydroxylgruppen und eine Ausgangsviskosität von 0,2 Pas aufwiesen, 5 min. bei 100 °C und 400 mbar zu einem Polymeren kondensiert. Anschließend erfolgte mit 0,5 ml einer 1 %-igen Triethylaminlösung die Neutralisation. Die Endviskosität des Polymeren ist das Maß für die Aktivität der Katalysatorlösung.

| | | | | | |
|---|---|---|---|---|---|
| Lagerzeit in Tagen | 0 | 4 | 7 | 34 | 76 |
| Viskosität in Pas | 39 | 46 | 70 | 38 | 39 |

Die katalytische Aktivität der Phosphornitridchlorid-Zusammensetzung blieb über diesen Zeitraum unverändert.

### Beispiel 18 (Vergleichsbeispiel)

Verfahrensweise analog Beispiel 17 mit Methylenchlorid anstatt des erfindungsgemäßen Thionylchlorides.

| | | | | | |
|---|---|---|---|---|---|
| Lagerzeit in Tagen | 0 | 4 | 7 | 34 | 76 |
| Viskosität in Pas | 32 | 19 | 36 | -- | 0,2 |

Die katalytische Aktivität der nicht erfindungsgemäßen Phosphornitridchlorid-Zusammensetzung sank während dieses Zeitraums deutlich ab.

### Beispiel 19

Die 20 %-ige Lösung des Phosphornitridchlorides analog Beispiel 7 in Thionylchlorid wurde mit Toluol auf 1 % Phosphornitridchlorid verdünnt. Die Aktivität dieser Lösung wurde wie in Beispiel 17 bestimmt.

| | | | | | |
|---|---|---|---|---|---|
| Lagerzeit in Tagen | 0 | 4 | 7 | 34 | 76 |
| Viskosität in Pas | 18 | 27 | 42 | 35 | 41 |

Die katalytische Aktivität der Phosphornitridchlorid-Zusammensetzung blieb über diesen Zeitraum unverändert.

### Beispiel 20 (Vergleichsbeispiel)

Verfahrensweise analog Beispiel 19 mit Methylenchlorid anstatt des erfindungsgemäßen Thionylchlorides.

| | | | | | |
|---|---|---|---|---|---|
| Lagerzeit in Tagen | 0 | 4 | 7 | 34 | 76 |
| Viskosität in Pas | 24 | 49 | 29 | 1 | 0,2 |

Die katalytische Aktivität der nicht erfindungsgemäßen Phosphornitridchlorid-Zusammensetzung sank während dieses Zeitraums wiederum deutlich ab.

## Patentansprüche

1. Verwendung von Phosphornitridchloride enthaltenden Zusammensetzungen zur Beschleunigung der Kondensation und/oder Äquilibrierung von Organosiloxanen und/oder Organopolysiloxanen, **dadurch gekennzeichnet**, daß die Zusammensetzungen 1 bis 99 Gew.-% anorganische und/oder organische Säurehalogenide enthalten.

2. Verwendung nach Anspruch 1, **dadurch gekennzeichnet**, daß die Phosphornitridchloride durch Umsetzung von Ammoniumsalzen mit Phosphorpentachlorid in einem anorganischen und/oder organischen Säurehalogenid erhalten werden.

3. Verwendung nach Anspruch 1 oder 2, **dadurch gekennzeichnet**, daß als anorganische und/oder organische Säurehalogenide anorganische und/oder organische Säurechloride verwendet werden.

4. Verwendung nach Anspruch 3, **dadurch gekennzeichnet**, daß ein Säurechlorid der phosphorigen Säure, der Phosphorsäure, der schwefligen Säure und/oder der Schwefelsäure enthalten ist.

5. Verwendung nach Anspruch 4, **dadurch gekennzeichnet**, daß Thionylchlorid enthalten ist.

6. Verwendung nach Anspruch 3, **dadurch gekennzeichnet**, daß Acetylchlorid enthalten ist.

7. Verwendung nach Anspruch 3, **dadurch gekennzeichnet**, daß Benzoylchlorid enthalten ist.

## Claims

1. Use of compositions containing phosphonitrilic chlorides for accelerating the condensation and/or equilibration of organosiloxanes and/or organopolysiloxanes, characterized in that the compositions contain from 1 to 99% by weight of inorganic and/or organic acid halides.

2. Use according to Claim 1, characterized in that the phosphonitrilic chlorides are obtained by reacting ammonium salts with phosphorus pentachloride in an inorganic and/or organic acid halide.

3. Use according to Claim 1 or 2, characterized in that the inorganic and/or organic acid halides used are inorganic and/or organic acid chlorides.

4. Use according to Claim 3, characterized in that an acid chloride of phosphorous acid, phosphoric acid, sulphurous acid and/or sulphuric acid is present.

5. Use according to Claim 4, characterized in that thionyl chloride is present.

6. Use according to Claim 3, characterized in that acetyl chloride is present.

7. Use according to Claim 3, characterized in that benzoyl chloride is present.

## Revendications

1. Utilisation de composés contenant du chlorure phosphonitrilique pour accélérer la condensation et/ou l'équilibration d'organosiloxanes et/ou d'organopolysiloxanes, **caractérisée en ce** que les composés contiennent des halogénures d'acide inorganiques et / ou organiques de 1 à 99 % en poids.

2. Utilisation selon la revendication 1, **caractérisée en ce que** les chlorures phosphonitriliques sont obtenus par transformation de sels d'ammonium avec du pentachlorure de phosphore en un halogénure d'acide inorganique et / ou organique.

3. Utilisation selon la revendication 1 ou 2, **caractérisée en ce que** du chlorure d'acide inorganique et /ou organique est utilisé comme halogénures d'acide inorganiques et / ou organiques.

4. Utilisation selon la revendication 3, **caractérisée en qu**'il y a un chlorure d'acide de l'acide phosphoreux, de l'acide phosphorique, de l'acide sulfureux et / ou de l'acide sulfurique.

5. Utilisation selon la revendication 4, **caractérisée en ce qu**'il y a du chlorure de thionyle.

6. Utilisation selon la revendication 3, **caractérisée en ce qu**'il y a du chlorure d'acétyle.

7. Utilisation selon la revendication 3, **caractérisée en ce qu**'il y a du chlorure de benzoyle.
